# EUROPEAN PATENT APPLICATION

(11) **EP 4 497 630 A1**
(43) Date of publication of application: **29.01.2025**
(21) Application number: 24185349.8
(22) Date of filing: 28.06.2024
(51) Int. Cl.: B60N 3/00

(54) **TABLE STRUCTURE FOR TRANSPORT**

(30) Priority: 27.07.2023 JP 2023122608
(71) Applicant: Suzuki Motor Corporation, Shizuoka 432-8611 (JP)
(72) Inventor: TAKEO, Hisayuki, 432-8611 Hamamatsu-shi (JP); BUZOJIMA, Hiroki, 432-8611 Hamamatsu-shi (JP)
(74) Representative: Plasseraud IP

(57) **Abstract**

[Problem to be Solved] To reduce risk of an article detaching from a table during movement of a table for a transport in a state in which the article is suspended therefrom from a stored state to a deployed state.

[Solution] A table 1 with a table structure for a transport includes: a main surface 2 on which an article is able to be placed, and the table 1 includes, at table edge portions 4 located at edges of the main surface 2, protruding portions 11 that project in a thickness direction of the table 1 from the table edge portions 4.

## Description

### [Technical Field]

The present invention relates to a table for a transport.

### [Background Art]

Some fixation members that are mounted in transports such as automobiles, aircraft, watercraft, and trains include tables attached therein. Here, the fixation members are members by which tables are rotatably supported, and include, for example, seats disposed in interiors of vehicles.

For example, a structure in which a foldably (rotatably) provided table is provided on a rear surface of a seatback of a seat (fixation member) disposed in an interior of a vehicle as disclosed in Patent Literature 1 is known. In the table structure, a support shaft is provided at an upper edge portion of a table main body, and the table main body is configured to turn around the support shaft.

In this example, a recessed groove continuously extending to connect the upper edge portion and a lateral edge portion is provided at a corner portion formed by the upper edge portion and the lateral edge portion of the table main body. In this example, an accommodating bag (baggage) with a handle is configured to be suspended from the recessed groove of the table main body. Here, the recessed groove extends from the upper edge portion to the lateral edge portion in a state in which the table is in a stored state, and is inclined downward as it approaches an outer side in a width direction of the table. In other words, the recessed groove provided in a table surface of the table main body in the stored state extends obliquely downward.

### [Citation List]

### [Patent Literature]

[Patent Literature 1] JP 2017-080232 A

### [Summary of Invention]

### [Problems to be Solved by the Invention]

However, in the case in which the accommodating bag with a handle is suspended from the recessed groove of the table main body in the stored state in the above example, the handle is hooked at a recessed groove 2a located at the upper edge portion of the table main body in the stored state. At that time, the accommodating bag is likely to move to a side further downward than the recessed groove 2c positioned at the lateral edge portion of the table main body due to its own weight, and the accommodating bag thus becomes unlikely to be engaged with a recessed groove 2b provided in a side surface of the table main body and the recessed groove 2c provided in the table surface and extending obliquely.

Therefore, if the table main body is caused to move through turning from the stored state to a deployed state in a state in which the handle is not engaged with the recessed groove 2b or the recessed groove 2c extending obliquely, the handle may not be engaged with the recessed groove extending obliquely, and the accommodating bag may be detached from the table main body due to inertia accompanying the turning operation depending on conditions such as a deploying speed, weight of the accommodating bag itself, and a shape and a dimension of the handle.

Furthermore, such a situation may occur even in a case in which the table main body turns downward around the support shaft from the stored state to a deployed state and the recessed groove is formed at a corner portion on a side opposite to a rotation shaft, for example. Therefore, there is room for improvement in the structure in the above example in an attempt to stably suspend an article when the table main body is caused to move from the stored state to the deployed state.

The present invention was made in order to solve the above problem, and an object thereof is to provide a table structure for a transport capable of reducing detachment of an article from the table for a transport during movement of the table for a transport from a stored state to a deployed state or during movement from the deployed state to the stored state in a state in which the article is suspended from the table for a transport.

### [Means for Solving the Problems]

A table structure for a transport according to the present invention to achieve the above object includes a table with one end portion rotatably supported by a fixation member of the transportation. In the table structure for a transport, the table includes a main surface on which an article is able to be placed, and the table includes, at table edge portions located at edges of the main surface, protruding portions that project in a thickness direction of the table from the table edge portions.

### [Advantageous Effect of Invention]

According to the present invention, it is possible to reduce detachment of an article from a table for a transport during movement of the table for a transport from a stored state to a deployed state or during movement from the deployed state to the stored state in a state in which the article is suspended from the table for a transport.

### [Brief Description of Drawings]

[Figure 1] Figure 1 is a front view illustrating an embodiment of a table structure for a transport according to the present invention and illustrating a state in which a table main body is in a stored state.
[Figure 2] Figure 2 is a rear view illustrating a rear surface of a table in Figure 1.
[Figure 3] Figure 3 is an enlarged front view illustrating a corner portion in Figure 1 in an enlarged view.
[Figure 4] Figure 4 is a perspective view of Figure 3.
[Figure 5] Figure 5 is a perspective view illustrating a first modification of the embodiment in Figure 1.
[Figure 6] Figure 6 is a perspective view illustrating a second modification of the embodiment in Figure 1.
[Figure 7] Figure 7 is a perspective view illustrating a third modification of the embodiment in Figure 1.
[Figure 8] Figure 8 is a perspective view illustrating a fourth modification of the embodiment in Figure 1.
[Figure 9] Figure 9 is a perspective view illustrating a fifth modification of the embodiment in Figure 1.
[Figure 10] Figure 10 is a rear view of a protruding portion and the like in Figure 9 in a deployed state seen from a rear side.
[Figure 11] Figure 11 is a perspective view illustrating a sixth modification of the embodiment in Figure 1.
[Figure 12] Figure 12 is a rear view of a protruding portion and the like in Figure 11 in the deployed state seen from the rear side.
[Figure 13] Figure 13 is a partial front view illustrating a seventh modification of the embodiment in Figure 1 in the stored state seen from the rear side.
[Figure 14] Figure 14 is a side view of Figure 13.
[Figure 15] Figure 15 is a front view illustrating an eighth modification of the embodiment in Figure 1 in the stored state seen from the rear side.
[Figure 16] Figure 16 is an enlarged perspective view illustrating a dented portion and the like in Figure 15.
[Figure 17] Figure 17 is a partial front view illustrating a ninth modification of the embodiment in Figure 1 in the stored state seen from the rear side.
[Figure 18] Figure 18 is a side view of Figure 17.

### [Mode for Carrying Out the Invention]

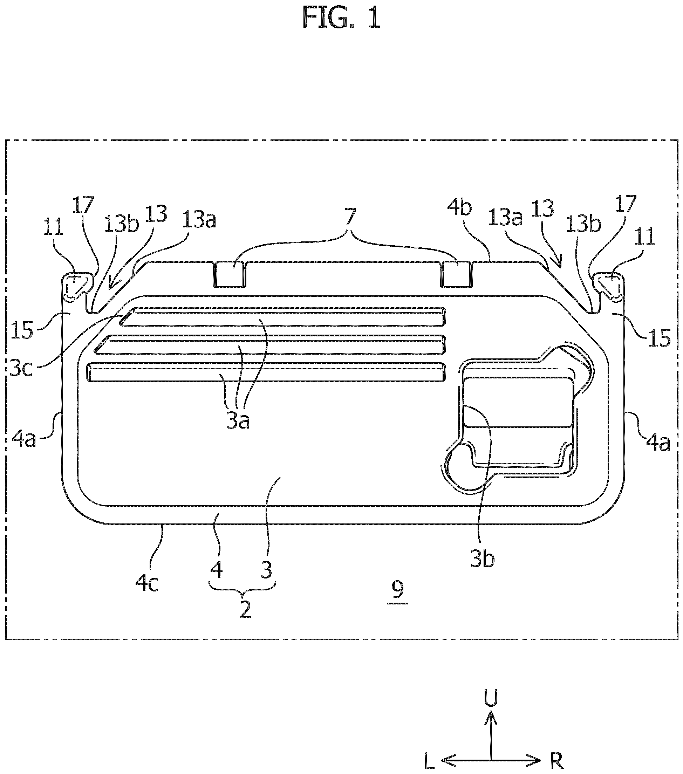

Hereinafter, an embodiment of a table structure for a transport according to the present invention will be described with reference to the drawings (Figures 1 to 4). Here, the present embodiment will be described by exemplifying a table 1 to be attached to a rear surface 9 of a seatback of a seat mounted in a vehicle as a table for a transport.

Note that the arrow Fr direction in the drawings represents a front side in a vehicle front-rear direction in the present embodiment. A "front portion (front end) and a rear portion (rear end)" in the description of the embodiment correspond to a front portion and a rear portion in the front-rear direction of the vehicle. Furthermore, the arrow R and the arrow L indicate the right side and the left side when a passenger views the vehicle front side and indicate a vehicle width direction. Here, a fact that the passenger views the vehicle front side corresponds to a fact that a passenger seated in a rear seat views a rear surface 9 of a seatback of a driver's seat. Furthermore, the vehicle width direction corresponds to a seat width direction and a table width direction. Furthermore, the arrow U indicates a vehicle upper side. Here, a table 1 upper end of the table 1, which will be described later, in a stored state corresponds to an upper end in a vehicle up-down direction.

The table structure for a transport according to the present embodiment includes the table 1, one end portion of which is rotatably supported by a fixation member of the transportation, the table 1 includes a main surface 2 on which an article can be placed, and further, the table 1 includes, at table edge portions 4 located at edges of the main surface 2, protruding portions 11 that project in a thickness direction of the table 1 from the table edge portions 4.

As illustrated in Figures 1 to 4, the transportation is assumed to be a vehicle (automobile), and the fixation member of the transportation is assumed to be a seat disposed in an interior of the vehicle in the present embodiment. The table 1 is attached to the rear surface 9 of the seatback of the seat. The table 1 has a substantially rectangular plate shape extending in the vehicle width direction and is formed of a resin material. Moreover, a part corresponding to one long side of the rectangle is rotatably supported by the rear surface 9 of the seatback, and the protruding portions 11 are provided at the table edge portions 4 that are located close to a predetermined side of the rectangle from among the main surface 2 of the table 1, in the present embodiment. Furthermore, the protruding portions 11 project upward from the table edge portions 4 of the main surface 2 in a state in which the main surface 2 of the table 1 faces upward, and in the deployed state, which will be described later. When the table 1 in the stored state the rear surface 9 of the seatback is seen from behind, the protruding portions 11 are triangular prisms having a substantially triangular shape and projecting backward.

According to the table structure configured as described above, it is possible to reduce detachment of baggage (articles) such as accommodating bags with handles, for example, hooked at the protruding portions 11 from the table 1 when the table 1 in a state in which the articles are suspended therefrom is caused to rotate. Furthermore, since the protruding portions 11 are provided at the table edge portions 4 located at edges of the main surface 2, it becomes easy to form a horizontal surface on the center side of the table 1, and it is easy to place the baggage on the table 1.

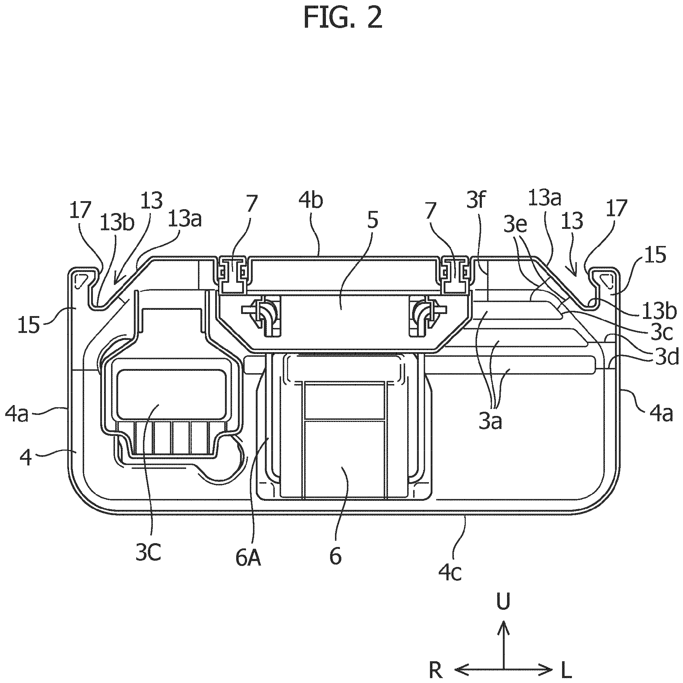

The protruding portions 11 are adapted to be provided at the table edge portions 4 located at the edges of the main surface 2 as illustrated in Figure 2, and are disposed at corner portions at left and right ends of the table 1. It becomes easy to form a plane on the center side inside the plane of the table 1, and it becomes easy to secure an area on the main surface 2 on which the baggage can be placed (the area of a placement surface 3) by the protruding portions 11 being disposed in this manner.

The table 1 has a deployed state in which the main surface 2 faces upward and a stored state in which the main surface 2 faces a lateral direction, and the table 1 is turned upward from the stored state and is brought into the deployed state. The table 1 can be brought into the two states (modes), that is, the deployed state and the stored state. The deployed state is a state for utilization as the table 1, and the table 1 is disposed to project on the vehicle rear side from the rear surface 9 of the seatback. In the deployed state, an article can be placed on the main surface 2, and office work, for example, can be performed on the main surface 2. On the other hand, the main surface 2 is disposed in a state of vertical placement such that the main surface 2 faces the vehicle rear side in the stored state. In this state, no articles are placed on the main surface 2. Note that disposition with the main surface 2 facing forward is also possible.

Note that although turning shafts 7 of the table 1 are not displaced in the present embodiment, the table 1 may be displaced in the horizontal direction using a second turning shaft that is different from the turning shafts 7 and a link mechanism. In this case, the table 1 may be turned downward and changed from the stored state to the deployed state. In addition, it is also possible to turn the table 1 upward and to cause the table 1 to be changed from the stored state to the deployed state.

Here, the table 1 includes a plurality of side surfaces as described above. The side surfaces are wall surfaces that are adjacent to the table edge portions 4 and include an upper surface 4b, left and right outer surfaces 4a, and a lower surface 4c. Here, the upper surface 4b is a side surface facing the vehicle upper side when the table 1 is in the stored state, and the lower surface 4c is a side surface facing the vehicle lower side in the stored state. Note that in the deployed state, the upper surface 4b is a side surface located on the side of the turning shafts and facing the vehicle front side, the left and right outer surfaces 4a are side surfaces located on both sides of the table 1 in the turning shaft direction of the table 1, and the lower surface 4c is a side surface located on the side opposite to the turning shafts and facing the vehicle rear side.

Two turning shafts 7 are provided at an upper portion of the table 1 that serves as an upper side of the rectangle when the table 1 is in the stored state. The two turning shafts 7 are disposed to be spaced apart from each other between the left and right ends of the table 1. The table 1 moves from the stored state to the deployed state or from the deployed state to the stored state by turning around the turning shafts 7. In this example, the table 1 is turned upward from the stored state and is brought into the deployed state.

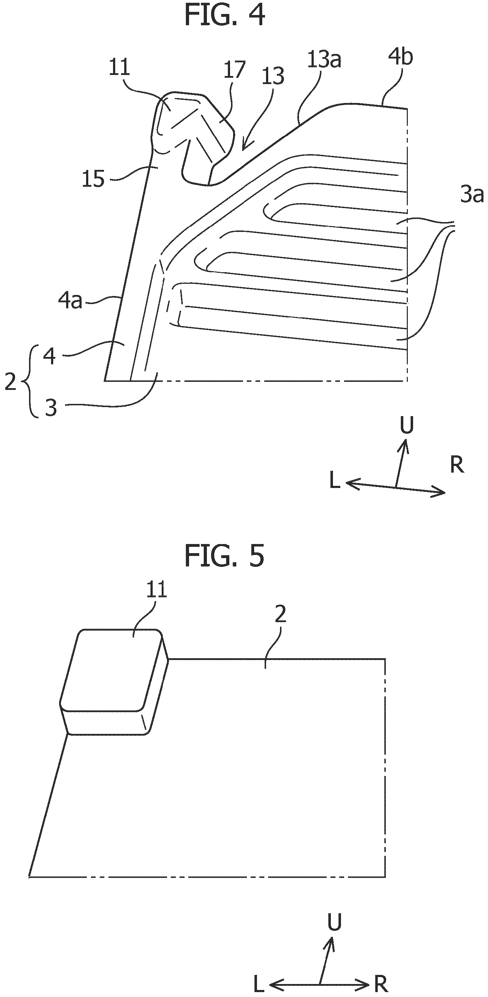

The table edge portions 4 at the outer periphery of the main surface 2 of the table 1 project with respect to the center of the main surface 2. Note that Figure 4 illustrates a state in which the table edge portions 4 project backward from the main surface 2 in the stored state. In the deployed state, the table edge portions 4 project upward with respect to the center of the main surface 2. The inside of the table edge portions 4 serves as the placement surface 3 of the table 1 on which an article can be placed. The table edge portions 4 reduce dropping of the articles on the placement surface 3 from the table 1 in the deployed state. Furthermore, the placement surface 3 is provided with groove portions 3a extending in the table width direction. The groove portions 3a are provided to position an information terminal such as a smartphone, for example, when the information terminal is caused to lean up against the seatback on the placement surface 3 and to reduce dropping of an article with a long length such as a writing implement, for example, from the placement surface 3. The groove portions 3a with long lengths function as beads in this manner and improve rigidity of the table 1. Additionally, the placement surface 3 is provided with an opening 3b in which a cup holder (not illustrated), for example, can be placed. The cup holder is provided on the back side of the placement surface 3.

As illustrated in Figure 2, a fixation portion 5 for fixing the table 1 to the rear surface 9 of the seatback, an arm 3c capable of supporting a cup or the like, and a support plate 6 that is turnably provided with respect to the fixation portion 5 are included on the back surface side of the table 1. The support plate 6 is fixed to the back surface of the table 1, and the fixation portion 5 and the support plate 6 are coupled via a support rod 6A. The fixation portion 5 is coupled to the turning shafts 7. In the deployed state, the table 1 is horizontally maintained by the support rod 6A.

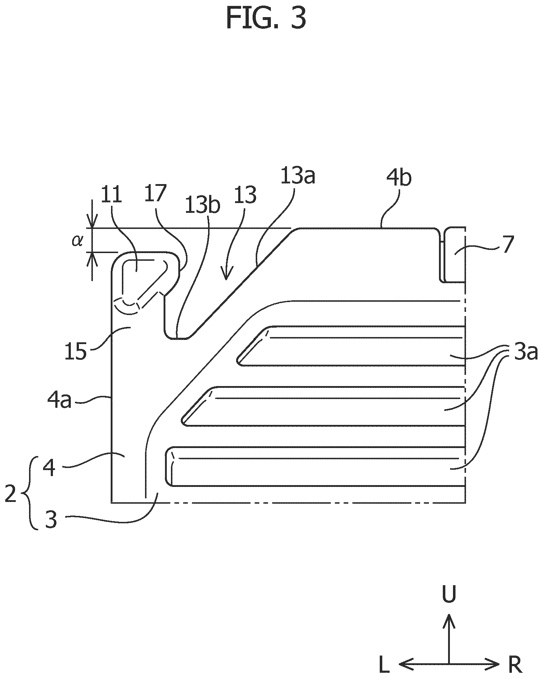

Here, the protruding portions 11 are preferably provided at the table edge portions 4 where one end portion of the table 1 is disposed. As illustrated in Figures 3 and 4, for example, the protruding portions 11 are preferably provided at the table edge portions 4 corresponding to an end portion where the turning shafts 7 are disposed, that is, an upper end portion of the table 1 in the stored state, from among the table edge portions 4 of the main surface 2. Since the amount of movement of the protruding portions 11 is less than that in a case in which the protruding portions 11 are provided on the side opposite to the rotation shafts (the lower side in the stored state) when the table 1 is turned between the stored state and the deployed state, inertial energy acting on the baggage decreases. As a result, the handle becomes unlikely to be detached from the table 1, for example, and it is thus possible to stably hook the baggage at the table 1. Note that the protruding portions 11 may be provided on the side opposite to the rotation shafts.

Furthermore, an acting point of a force on the side of the turning shafts 7 is located on the side of the passenger by the amount corresponding to the amount of projection of the protruding portions 11 if thumbs, for example, are pressed against the protruding portions 11 and the table 1 is turned when a side end portion (in this example, the upper end portion of the table 1 in the stored state) of the table edge portions 4 where the protruding portions 11 are located is gripped and the table 1 is deployed from the stored state to the deployed state, by providing the protruding portions 11 at the above positions.

Furthermore, in a case in which fingers are placed on the side end portion of the table edge portions 4 and the protruding portions 11 of the table 1 on the side of the placement surface 3 to turn the table 1 from behind, the protruding portions 11 serve as acting points close to the side of the turning shafts 7, the protruding portions 11 project in the direction approaching the operator (passenger), and it thus becomes easy to perform the operation of turning the table 1.

Furthermore, upper ends of the protruding portions 11 (upper ends of the projecting portions 15) in the stored state are disposed at a clearance α from the upper surface 4b of the table 1 as illustrated in Figure 3 in the present embodiment. In other words, front ends of the protruding portions 11 (front ends of the projecting portions 15) are disposed at a clearance α from the rear surface 9 of the seatback in the deployed state. It becomes easy to insert the handle from the clearance α in the deployed state by providing the clearance ex.

Note that since the rear surface 9 of the seatback has elasticity, the clearance α may not be provided. In other words, the upper ends of the protruding portions 11 (the upper ends of the projecting portions 15) in the stored state and the upper surface 4b of the table 1 may be disposed at the same height. The clearance α is effective in a case in which the fixation member is a wall portion with predetermined hardness rather than a member that is likely to be elastically deformed like the rear surface 9 of the seatback.

Next, the shape of the table 1 will be described. The table 1 in the present embodiment includes dented portions 13 and projecting portions 15. Hereinafter, each component will be described.

The dented portions 13 are formed at side portions configuring the periphery of the table 1 and are formed to be recessed toward the inside of the main surface 2 in the direction in which the main surface 2 spreads, and the above-mentioned protruding portions 11 are preferably provided at the table edge portions 4 that are adjacent to edges of the dented portions 13. The dented portions 13 in the present embodiment are provided at corner portions on both left and right sides of the end portions where the turning shafts 7 are provided and are recessed downward from the upper end of the table 1 in the stored state as illustrated in Figure 1. In this example, the left and right dented portions 13 are formed to be horizontally symmetrical.

The protruding portions 11 are disposed outside the handle (outer side in the seat width direction) by providing the dented portions 13, and it is thus possible to easily cause the handle to abut the protruding portions 11 and to reduce detachment of the handle from the table 1 when the table 1 is turned from the stored state to the deployed state.

The dented portions 13 are provided with inclined portions 13a. The inclined portions 13a are provided at side portions where the dented portions 13 are provided, and are preferably provided to extend from edges of the dented portions 13 located on the side further from the protruding portions 11 toward bottoms 13b of the dented portions 13. In the present embodiment, the inclined portion 13a provided at the dented portion 13 on the left side is inclined downward as it approaches the left side when the table 1 is in the stored state, for example. The upper portions of the inclined portions 13a correspond to edges of the dented portions 13 and are connected to the upper end of the table 1. Lower portions of the inclined portions 13a are connected to the bottoms 13b of the dented portions 13.

Since the volume inside the dented portions 13 is enlarged by providing the inclined portions 13a, a configuration with which it is possible to easily hook the handle or the like at the dented portions 13 is achieved. Furthermore, the handle moves along the inclined portions 13a and is then engaged with the bottoms 13b of the dented portions 13, and it is thus possible to stably support the accommodating bag or the like with a handle. The dented portions 13 are narrowed toward the bottoms 13b, and the handle is thus sandwiched at the bottoms 13b of the dented portions 13 and is stably supported.

Side portions that configure a periphery of the table 1 preferably include projecting portions 15 that project on an outer side of the table 1 in a direction in which the main surface 2 spreads. The projecting portions 15 in the present embodiment are disposed on the outer side of the dented portions 13 in the table width direction and extend in the up-down direction when the table 1 is in the stored state as illustrated in Figures 1 to 4. For example, the projecting portion 15 on the left side is disposed further leftward than the dented portion 13 on the left side and linearly extends upward from the bottom 13b of the dented portion 13. Furthermore, the projecting portion 15 on the left side projects upward from the table edge portion 4 on the left side of the table 1. The projecting portion 15 on the right side is disposed on the right side of the dented portion 13 on the right side and linearly extends upward from the bottom 13b of the dented portion 13 on the right side, similarly to the projecting portion 15 on the left side. In addition, the left and right projecting portions 15 are formed to be horizontally symmetrical. The projecting portions 15 in the present embodiment are configured to extend upward when the table edge portions 4 located outward in the table width direction are in the stored state.

Furthermore, the protruding portions 11 are preferably configured to project in the thickness direction of the table 1 from the projecting portions 15. When the table 1 is in the stored state, for example, the protruding portions 11 project backward from the upper portions of the projecting portions 15. Furthermore, since the projecting portions 15 are disposed outward in the table width direction and the projecting portions 15 are provided with the protruding portions 11, it is possible to make it easy to hook the handle at the protruding portions 11.

In addition, the protruding portions 11 preferably include expanding portions 17 expanding toward the dented portions 13, and the expanding portions 17 preferably include inclined surfaces that are inclined in the inclination direction of the inclined portions 13a. In the present embodiment, the expanding portions 17 expand toward the dented portions 13 from the side surfaces projecting backward from the upper end portions of the projecting portions 15 and facing the facing portions of the protruding portions 11 and the side surfaces of the projecting portions 15 facing the dented portions 13 in the stored state. The expanding portions 17 extend in the front-rear direction of the seat. Inner ends of the expanding portions 17 in the table width direction are disposed further inward than the outer ends of the bottoms 13b of the dented portions 13 in the table width direction. Furthermore, the lower ends of the expanding portions 17 in the stored state are inclined toward the outer side of the expanding portions 17 in the table width direction from the inner ends of the expanding portions 17 in the table width direction toward the lower side. The inclination direction is preferably caused to correspond to the inclination direction of the inclined portions 13a of the dented portions 13. In the stored state, the side surfaces of the projecting portions 15 located below the expanding portion 17 and facing the dented portions 13 extend in the up-down direction.

As described above, the width of upper openings 3b of the dented portions 13 becomes slightly narrow in the stored state by providing the expanding portions 17, it becomes difficult to hook the handle at the dented portions 13 while it becomes easy to maintain (adjust) the interval between the expanding portions 17 and the inclined portions 13a at an appropriate width in the table width direction. Therefore, it is possible to smoothly guide the handle up to the bottoms 13b of the dented portions 13 in the inclination direction of the lower ends of the expanding portions 17 and the inclination direction of the inclined portions 13a. Therefore, it is possible to achieve a configuration that easily balances between how easy the handle can be hooked and how unlikely the handle is to be detached.

The parts of the side portions that configure the periphery of the protruding portions 11 and are located close to the dented portions 13 may be inclined in the inclination direction of the inclined portions 13a of the dented portions 13. Upper ends of the protruding portions 11 in the present embodiment horizontally extend as illustrated in Figure 1 in the stored state, and outer sides thereof in the table width direction extend in the up-down direction. The protruding portions 11 are inclined outward in the table width direction from the inner ends of the upper ends in the table width direction toward the lower side. The inclination direction corresponds to the inclination direction of the inclined portions 13a of the dented portions 13. Here, the inclined parts at the lower ends of the expanding portions 17 may be formed to be continuous with the inclined parts of the protruding portions 11. The inclined parts of the protruding portions 11 may be formed to have the inclination directions corresponding to the inclination direction of the inclined parts at the lower ends of the expanding portions 17. Furthermore, the lower ends of the protruding portions 11 may be inclined as described above even in a case in which the expanding portions 17 are not provided.

When the table 1 is moved from the stored state to the deployed state, the handle moves along the inclined portions 13a of the dented portions 13. Here, since the lower ends (the other end side) of the protruding portions 11 are inclined along the inclined portions 13a of the dented portions 13 in the present embodiment, it is possible to increase the abutting area between the handle and the lower ends of the protruding portions 11. As a result, it is possible to effectively reduce detachment of the handle from the table 1.

As described above, the protruding portions 11 are preferably provided at the table edge portions 4 that are adjacent to the edges located on the outer side of the table 1 in the direction in which the turning shaft 7 extends, from among the edges of the dented portions 13. In the present embodiment, the protruding portions 11 are provided at the table edge portions 4 on the outer side of the dented portions 13 in the table width direction. In the present embodiment, the protruding portions 11 are provided at the projecting portions 15 provided on the outer side of the dented portions 13 in the table width direction. Note that the projecting portions 15 are extensions of the table edge portions 4 located on the outer side of the dented portions 13 in the table 1 (outward in the table width direction) and are configured as parts of the table edge portions 4.

The distance between the handle accommodated in the dented portions 13 and the protruding portions 11 becomes short, and the handle becomes unlikely to move, by providing the protruding portions 11 in this manner. As a result, the handle becomes unlikely to fall from the table 1. Furthermore, since the protruding portions 11 are provided at the periphery of the dented portions 13, it is also possible to reinforce the periphery of the dented portions 13. Note that although the protruding portions 11 are provided at the outer edges of the dented portions 13 in the table width direction in the present embodiment, the protruding portions 11 may be provided at the inner edges in the table width direction.

Furthermore, the groove portions 3a extending in the left-right direction are formed as described above in the placement surface 3 in the above embodiment. The groove portions 3a project from the back surface and extend in the table width direction on the side of the back surface of the placement surface 3. As illustrated in Figure 2, left and right end surfaces of the groove portions 3a are coupled with first ribs 3d provided on the inner side of the projecting portions 15 on the back surface of the placement surface 3. The first ribs 3d extend in the table width direction, and the outer sides of the first ribs 3d are connected to the projecting portions 15 or the outer surface 4a. It is possible to transmit a load of baggage or the like transmitted to the projecting portions 15 from the left and right end surfaces of the groove portions 3a to the groove portions 3a via the first ribs 3d and to enhance rigidity of the left and right end surfaces by providing the first ribs 3d. As a result, it is possible to stably support the baggage. Furthermore, it is also possible to reduce oscillation and deformation of the table 1 by providing the first ribs 3d.

Additionally, wall surfaces configuring the dented portions 13 and the groove portions 3a are coupled with second ribs 3e on the back side of the placement surface 3. Here, the outer sides of the second ribs 3e are connected to the inclined portions 13a of the dented portions 13, and the inner sides of the second ribs 3e are connected to the end surfaces or the side portions of the groove portions 3a. Here, the second ribs 3e preferably extend to perpendicularly intersect the inclination direction of the inclined portions 13a of the dented portions 13. It is possible to transmit a load of baggage or the like transmitted to the dented portions 13 to the groove portions 3a via the inclined portions 13a of the dented portions 13 and the second ribs 3e and further to enhance rigidity of the dented portions 13 by providing the second ribs 3e. As a result, it is possible to stably support the baggage, and it is also possible to reduce oscillation and deformation of the table 1. Furthermore, third ribs 3f connecting the upper surface 4b and the side portions of the groove portions 3a may be provided to secure rigidity.

In the present embodiment, the left and right end portions 3c of the groove portions 3a are inclined substantially in parallel to the inclined direction of the inclined portions 13a of the dented portions 13 as illustrated in Figure 2. As illustrated in Figure 2, one of the second ribs 3e connects the inclined end portion 3c of the groove portions 3a and the inclined portion 13a and perpendicularly intersects the inclination direction of the inclined portion 13a and the like. It is possible to improve rigidity at the periphery of the end portions 3c of the groove portions 3a and to receive the load transmitted to the inclined portions 13a on the side of the groove portions 3a via the second ribs 3e by providing the second ribs 3e in this manner.

The description of the present embodiment is an indication of an example for describing the present invention and is not intended to limit the invention stated in the claims. Furthermore, the configurations of the respective portions of the present invention are not limited to those of the above embodiment, and various alterations can be made within the technical scope of the claims.

Although the above embodiment has been described on the assumption that the transport is a vehicle (automobile), the present invention is not limited thereto. For example, the transportation may be a train, a watercraft, an aircraft, or the like. Furthermore, although the fixation member is assumed to be a seat disposed in the interior of the vehicle in the above embodiment, the present invention is not limited thereto. For example, the fixation member may be a table provided on a wall surface (side trim) in the interior of the vehicle. Furthermore, the fixation member may be any article disposed in a passenger room of a transport other than the vehicle. In addition, the fixation member may be a wall portion provided outside the transportation. Although the table edge portions 4 project from the placement surface 3 in the above embodiment, the present invention is not limited thereto, and the table edge portions 4 may be provided on the same plane as the placement surface 3.

Moreover, dents may be provided in the fixation member such as the rear surface 9 of the seatback at positions corresponding to the protruding portions 11. In the case of the rear surface 9 of the seatback, the rear surface 9 is pressed by the protruding portions 11 and is then elastically deformed to allow the protruding portions 11 to sink into the rear surface 9 even when the protruding portions 11 abut the rear surface 9. On the other hand, it may be difficult for the table 1 to be brought into the predetermined stored state due to interference of the protruding portions 11 in the case of a fixing member of a material that is harder than the rear surface 9 of the seatback. It is possible to bring the table 1 into the predetermined stored state by providing the dents in the fixation member in this case as well.

Modifications of the above embodiment will be described below. Although the protruding portions 11 have substantially triangular prism shapes projecting on the vehicle rear side in the stored state in the above embodiment, for example, the present invention is not limited thereto. For example, the protruding portions 11 may be cylinders or quadrangular prisms. Furthermore, a configuration that does not include the dented portions 13 may be employed by adjusting the amount of projection of the protruding portions 11, for example, as illustrated in Figures 5 to 10. Furthermore, although the protruding portions 11, projecting portions 15, and the dented portions 13 are provided to be horizontally symmetrical in the above embodiment, the present invention is not limited thereto, and these may be provided on one of the left and right sides. In a case in which the table main body is turned downward from the stored position to the deployed position, the protruding portions 11, the projecting portions 15, and the dented portions 13 may be provided on the side opposite to the rotation shaft of the table 1. Hereinafter, first to ninth modifications of the above embodiment will be described with reference to Figures 5 to 18.

### (First modification)

First, the first modification will be described. As illustrated in Figure 5, a protrusion that is a quadrangular prism may be provided at corner portion of the main surface 2. The protruding portions 11 may be provided at corner portions on both left and right sides or one of the corner portions. Note that although the main surface 2 of the table 1 does not include the table edge portions 4 projecting from the placement surface 3 in this example, the present invention is not limited thereto, and the main surface 2 may be provided with table edge portions 4.

Since the dented portions 13 are not provided in the first modification, a load acting on the protruding portions 11 is easily received by the entire table 1. In a case in which the protruding portions 11 are provided on the side of the rotation shaft of the table 1, in particular, the load is easily received on the side of the fixation member, and it is possible to stably support baggage or the like on the table 1.

### (Second modification)

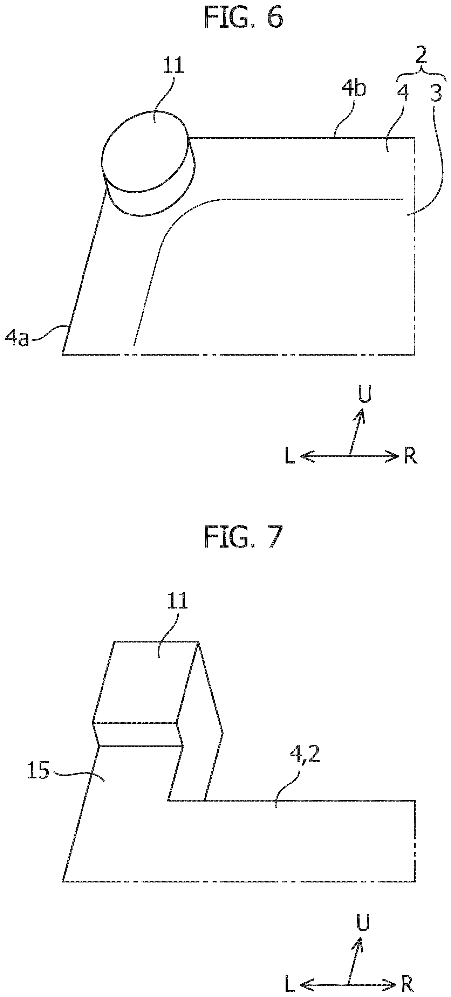

Next, the second modification will be described. As illustrated in Figure 6, the protruding portion 11 may be cylinder. The contact surface between the outer circumferential surface of the protruding portion 11 and the handle increases by forming the protruding portion 11 into the cylindrical shape, and it is easy to reduce the load on the handle and to restrict movement of the handle. An edge portion side surface (at a corner portion where the left surface and the upper surface are connected) in which the protruding portion 11 is formed is preferably curved along the protruding portion 11. Note that the edge portion side surface is inclined in an arc shape in a plan view in this example.

### (Third modification)

Next, the third modification will be described. As illustrated in Figure 7, the projecting portion 15 may be caused to project further upward than the center of the table 1 in the width direction in the stored state, and the protruding portion 11 may be provided at a distal end of the projecting portion 15. It is easy to hook the handle at the inner side portion of the projecting portion 15 in the table width direction, and it is possible to stably support the baggage.

In the third modification, the dented portions 13 illustrated in Figure 1 are not provided as illustrated in Figure 7. In this example, the projecting portion 15 is caused to further project than the upper surface. It is preferable to provide a step or a dented portion in a vehicle member, which is not illustrated in the drawing, such that the step or the dented portion are disposed on the side closer to the center in the table width direction than the projecting portion 15 or such that the step or the dented portion does not interfere with the projecting portion 15. Furthermore, the projecting portion 15 is caused to project further upward than the center in the table width direction in the stored state, and the protruding portion 11 with the cylinder shape is provided at a distal end of the projecting portion 15. Note that the protruding portion 11 may be formed into substantially triangular shape as in the above example.

The projecting portion 15 is likely to receive a load acting on the projecting portion 15 by the entire table since the dented portions 13 illustrated in Figure 1 are not provided, and it is possible to stably support baggage. Furthermore, since the projecting portion 15 is caused to further project than the upper surface, it is possible to avoid interference between the handle or a person's hand and the surface of the dented portion on the center side in the table width direction when the handle is hooked at the projecting portion 15, and it is easy to hook the handle at the inner portion of the projecting portion 15 in the table width direction.

Furthermore, since the protruding portion 11 is provided at the distal end of the projecting portion 15, it is possible to cause the handle to abut the lower surface 11a or the outer surfaces 11b in the width direction of the protruding portion 11 in the stored state illustrated in Figure 7 and to reduce unintended detachment of the handle from the projecting portion 15.

### (Fourth modification)

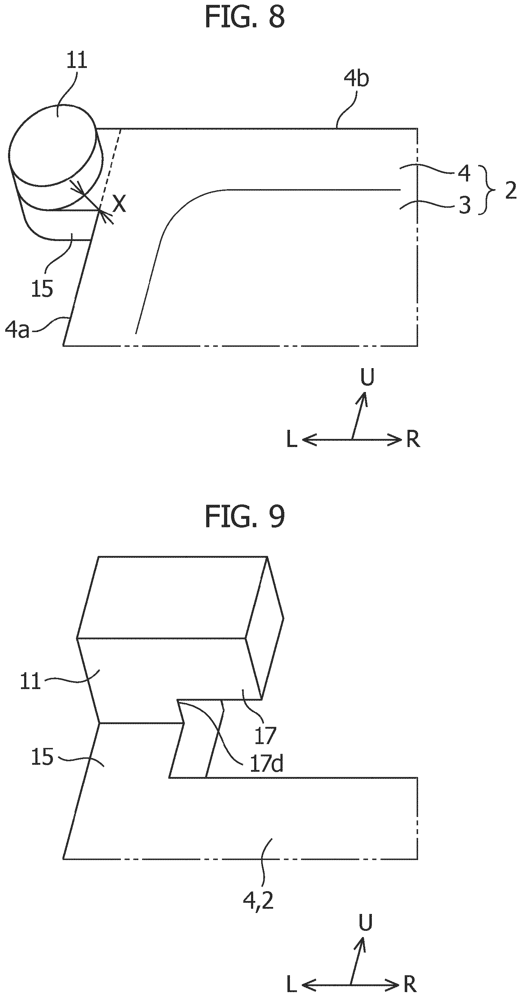

Next, the fourth modification will be described. As illustrated in Figure 8, the projecting portion 15 may be caused to project outward in the table width direction. In this example, protruding portion 11 with cylindrical shape is provided at the distal end of the projecting portion 15. The projecting portion 15 extends such that the protruding portion 11 is located further outward in the vehicle width direction than the outer surface 4a. The outer surface of the protruding portion 11 in the table width direction and the outer surface of the distal end of the projecting portion 15 in the table width direction have the same curvature radius or similar curvature radii and are continuously formed in the table thickness direction.

Since the protruding portion 11 is located further outward in the vehicle width direction than the outer surface 4a, it is possible to restrict movement of the handle in the table width direction with the inner surface 11a of the protruding portion 11 in Figure 8 in the table width direction and the outer surface 4a when the handle is hooked at the protruding portion 11, and to stably support the baggage.

Furthermore, since at least inner surface 11a of the protruding portion 11 in the table width direction is formed to be located on the outer side in the front-rear direction from the inner side in the table width direction toward the outer side in the table width direction, a clearance is formed between the inner surface 1 1a in the table width direction and the outer surface 4a (the width X in Figure 8), and the handle is thus easily supported even if the handle is thick.

Additionally, since the protruding portion 11 is formed into a cylindrical shape, the handle is not locally deformed, and it is possible to bring the handle into contact with the inner surface 11a in the table width direction and to reduce degradation or the like of the handle. Note that if only the inner surface 11a of the protruding portion 11 in the table width direction is formed into an arc shape (this may be an oval shape), the effect can be obtained, and the shape of the outer surface 11b of the protruding portion 11 in the table width direction can be appropriately changed.

Furthermore, since the projecting direction of the projecting portion 15 is the width direction of the table 1 in the fourth modification, it is possible to avoid contact between the projecting portion 15 and another member in the radial direction with respect to the turning shaft of the table 1. Note that the protruding portion 11 may be caused to project on the side of the back surface in the fourth modification.

Furthermore, in a case in which the turning shaft 7 is provided at the table edge portion 4 on the side in which the projecting portion 15 is provided, the projecting portion 15 projects in the axial direction of the turning shaft 7 that is a table width direction, a load acting on the projecting portion 15 is thus easily received by a vehicle member via the turning shaft 7, and it is thus possible to stably support the baggage.

Furthermore, since the amount of movement of the projecting portion 15 with turning decreases when the table is turned between the stored position and the deployed position, movement of the handle is reduced, for example, and it is possible to stably support the baggage. For example, since the amount of movement of the projecting part at the time of turning is small, it is possible to reduce hooking of the projecting portion 15 at clothes or the like of the passenger at the time of turning, for example. Therefore, this is effective for and is easily applied to installation of the table 1 in a relatively small place.

### (Fifth modification)

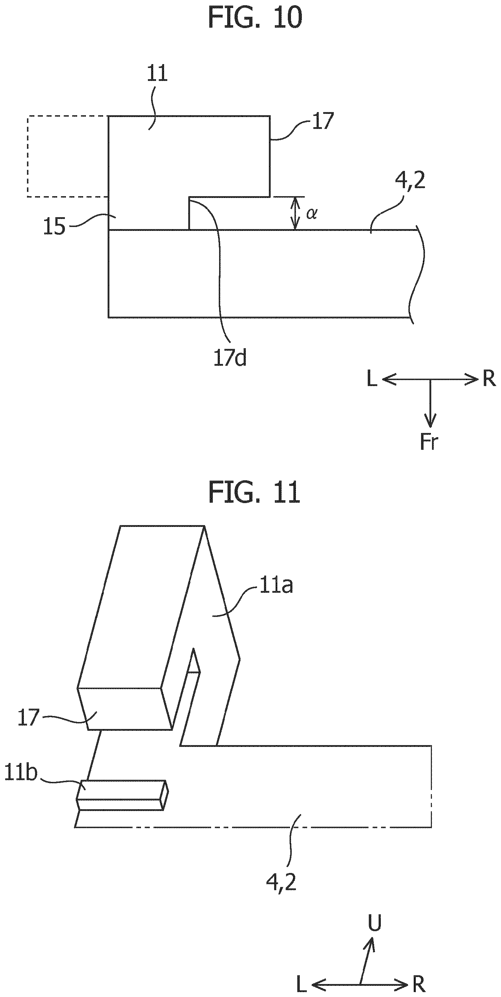

Next, the fifth modification will be described. As illustrated in Figures 9 and 10, the projecting portion 15 may be caused to project further upward than the center of the table 1 in the width direction in the stored state, the protruding portion 11 may be provided at the distal end of the projecting portion 15, and further, expanding portion 17 expanding on the inner side of the protruding portion 11 in the table width direction may be provided. Here, if the handle is inserted into the clearance α between the expanding portion 17 and the table edge portion 4 as illustrated in Figures 9 and 10, it is possible to restrict movement in the up-down direction in the stored state and movement in the front-rear direction in the deployed state of the handle with the expanding portion 17 and the table edge portion 4, and as a result, it is possible to stably support the baggage.

In this example, it is possible to reduce detachment of the handle from the protruding portion 11 at the time of the turning of the table 1 even in a case in which the front end of the table 1 in the deployed state is turned upward and forward at the time of movement from the deployed state to the stored state. Furthermore, it is possible to cause the handle to abut the position of a root 17d of the expanding portion 17 and to reduce detachment of the handle when the table 1 is turned from the deployed state to the stored state. Note that in this example, the expanding portion 17 may be expanded outward in the table width direction as illustrated by the dashed line in Figure 10.

### (Sixth modification)

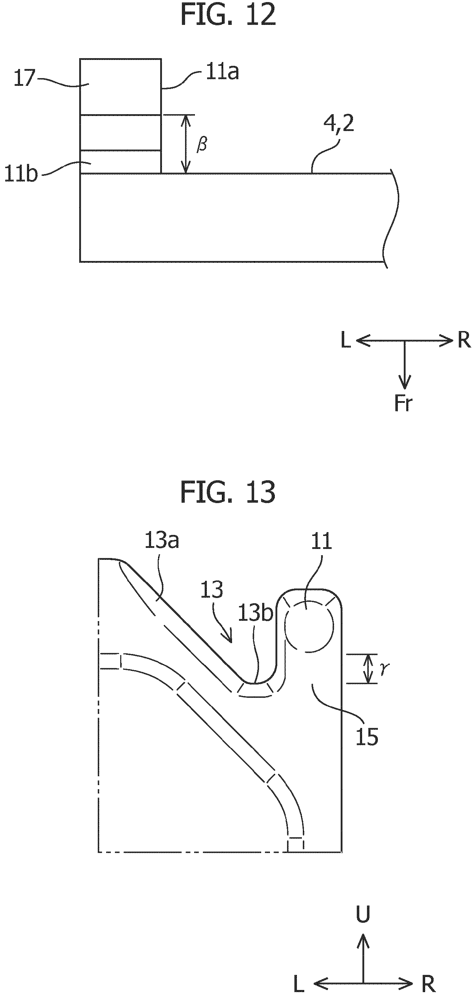

Next, the sixth modification will be described. As illustrated in Figures 11 and 12, the projecting portion 15 may be caused to project forward from the front end of the table 1 in the deployed state, first protruding portion 11a projecting upward may be provided at the front portion of the projecting portion 15, and the expanding portion 17 may be provided to expand backward from the upper end of the first protruding portion 11a. Furthermore, second protruding portion 11b may be provided at the table edge portion 4 located further back than the rear end of the expanding portion 17 in the deployed state in this example.

In this example, it is possible to restrict movement of the handle in the front-rear direction in the deployed state with the expanding portions 17 and the table edge portion 4 by inserting the handle into a clearance β between the lower end of the expanding portion 17 and the table edge portion 4 as illustrated in Figure 12 in the deployed state, and to thereby stably support the baggage. Furthermore, the second protruding portion 11 can reduce detachment of the handle by the handle abutting the second protruding portion 11b when the table 1 is turned even at the time of movement from the stored state to the deployed state.

For example, the first protruding portion 11a may not be provided with the expanding portion 17 as illustrated in Figure 7. Furthermore, the second protruding portion 11b may be disposed further inward in the table width direction than the first protruding portion 11a. In that case, the second protruding portion 11b may be formed on the outer surface 4a to be long in both directions.

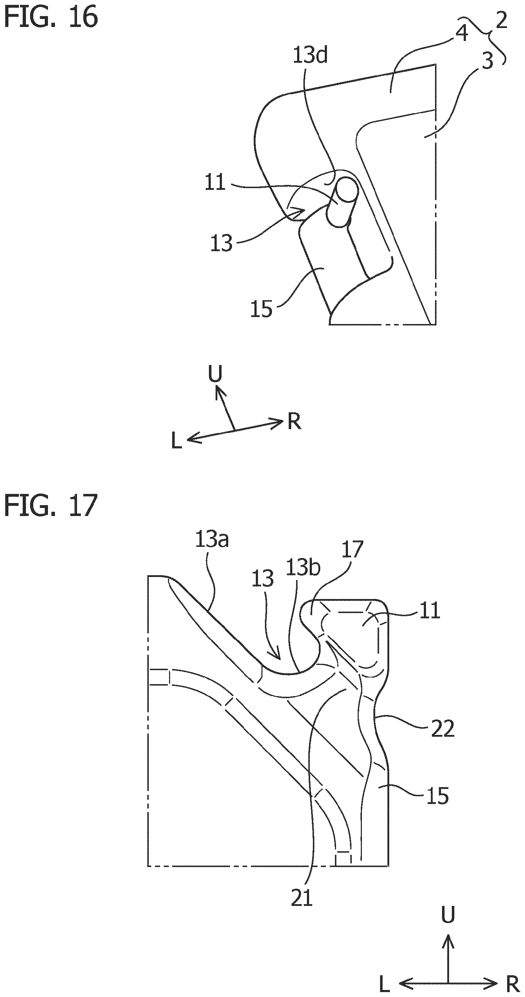

Note that the second protruding portion 11b can be provided even in a case in which the first protruding portion 11a does not include the expanding portion 17 as in the examples illustrated in Figures 5 to 8 and 13 to 17. In the case in which the groove portion 22 is formed as in the example illustrated in Figure 17, it is also possible to form the second protruding portion 11b on the side of the placement surface 3 of the groove portion 22 along the groove portion 22.

### (Seventh modification)

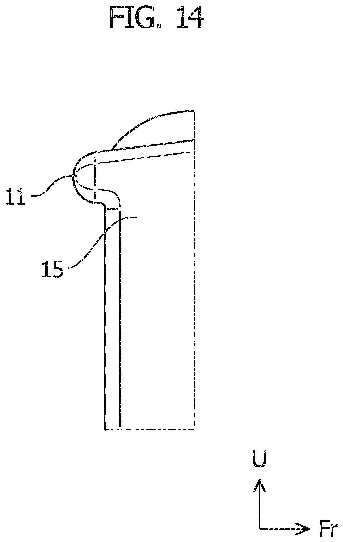

Next, the seventh modification will be described. As illustrated in Figures 13 and 14, the protruding portion 11 may be formed in semispherical shape in the above embodiment. In this example, the expanding portion 17 is not provided. Therefore, it is possible to set a large frontage dimension for the dented portion 13 located at an upper end of the dented portion 13 in the stored state and to easily insert the handle to the protruding portion 11 when the handle is inserted into the depth direction of the dented portion 13. Furthermore, since bottom 13b of the dented portion 13 and the lower end of the protruding portion 11 are disposed at an interval γ, it is possible to easily cause the handle to abut each of the dented portion 13 and the protruding portion 11 and to stably support the baggage.

### (Eighth modification)

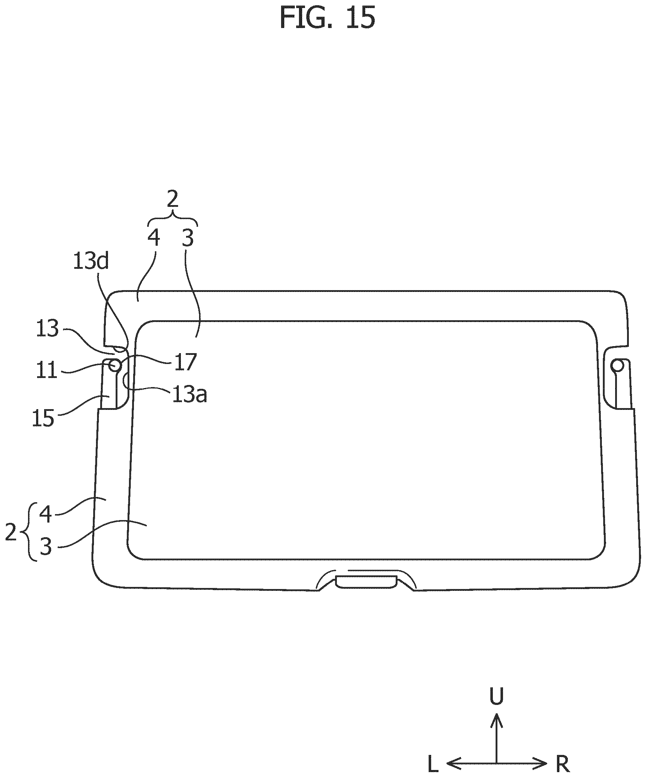

Next, the eighth modification will be described. As illustrated in Figures 15 and 16, the dented portion 13 may be provided at an outer portion of the table 1 in the width direction. The dented portion 13 in this example is dented inward in the table width direction, and the dented portion 13 has spaces with substantially quadrangular shape. In this example, the dented portion 13 is formed like so-called quadrangular notches. In this example, the projecting portion 15 extends upward from a lower edge of the dented portion 13 in the stored state. The protruding portion 11 and the expanding portion 17 are provided at an upper portion of the projecting portion 15 and at inner portion in the table width direction. Inner end of the projecting portion 15 in the vehicle width direction located further downward than the protruding portion 11 is disposed at an interval from the bottom 13a of the dented portion 13. In this example, it is possible to insert a hook or the like between the distal end (upper end) of the projecting portion 15 and the upper inner wall 13d of the dented portion.

In addition, in the eighth modification, the projecting portion 15 may be provided to project toward the side opposite to the rotation shaft from the side of the rotation shaft of the dented portion 13 in a case in which the table 1 is turned downward from the stored position to the deployed position. In that case, it is preferable that the protruding portion 11 be provided on the side of the distal end of the projecting portion 15.

### (Ninth modification)

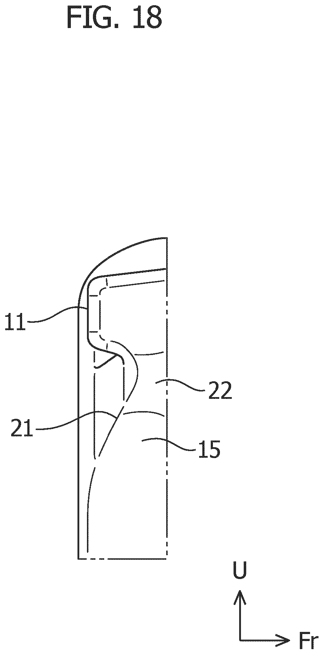

Next, the ninth modification will be described. As illustrated in Figures 17 and 18, an inclined surface 21 may be provided on surface of the projecting portion 15 corresponding to the main surface 2, and furthermore, groove 22 may be provided between the protruding portion 11 and part of the projecting portion 15 on the side of the main surface 2 in the longitudinal direction. It is possible to make it easy to hook the handle by providing the groove 22 and the inclined surface 21 in this manner. The groove 22 formed in the surrounding of the projecting portion 15 functions as the dented portion 13 in the above embodiment and allows the handle to be engaged. Furthermore, the projecting portion 15 may be provided with inclined surface 15a that is inclined toward the groove 22. Although the inclined surface 21 is provided on the side of the main surface 2 in this example, the inclined surface 21 may be provided on the side of the back surface.

Furthermore, in the ninth modification, the protruding portion 11 is set to be lower on the side of the back surface than the edge portion of the table 1 by the amount corresponding to the dimension β. With such a configuration, it is possible to avoid contact between the protruding portion 11 and the side of the fixation member even if the protruding portion 11 oscillate in the turning direction due to impact at the time of the turning in a case in which the table 1 is turned upward from the deployed state toward the stored state. Note that it is only necessary to set β to a dimensional difference in the thickness direction between the edge portion and the placement surface 3.

Furthermore, in regard to the amount of projection of the protruding portion 11 in the ninth modification, the protruding portion 11 may project to be coincide with the placement surface at the edge portion or may project to be higher than the edge portion.

### [Reference Signs List]

- 1: Table
- 2: Main surface
- 3: Placement surface
- 3a: Groove portion
- 3b: Opening
- 3c: End portion
- 3d: First rib
- 3e: Second rib
- 3f: Third rib
- 4: Table edge portion
- 4a: Outer surface
- 4b: Upper surface
- 7: Turning shaft
- 9: Rear surface of seatback
- 11: Protruding portion
- 11a: First protruding portion
- 11b: Second protruding portion
- 13: Dented portion
- 13a: Inclined portion
- 13: Bottom
- 15: Projecting portion
- 17: Expanding portion
- 17d: Root
- 21: Inclined surface
- 22: Groove

## Claims

1. A table structure for a transport, including a table with one end portion rotatably supported by a fixation member of a transport, **characterized in that**:
the table has a main surface on which an article is able to be placed; and
the table includes, at a table edge portion located at an edge of the main surface, a protruding portion that projects in a thickness direction of the table from the table edge portion.

2. The table structure for a transport according to claim 1, wherein the protruding portion is provided at the table edge portion in which the one end portion is disposed.

3. The table structure for a transport according to claim 1, wherein
the table has a deployed state in which the main surface faces upward and a stored state in which the main surface faces a lateral direction, and
the table is turned upward from the stored state, and is brought into the deployed state.

4. The table structure for a transport according to any one of claims 1 to 3, wherein
a dented portion that is recessed toward inside of the main surface in a direction in which the main surface spreads, is formed at side portion configuring a periphery of the table, and
the protruding portion is provided at the table edge portion that is adjacent to an edge of the dented portion.

5. The table structure for a transport according to claim 4, wherein an inclined portion that extends from the edge of the dented portion located on a side far from the protruding portion toward a bottom of the dented portion is provided at the side portion at which the dented portion is formed.

6. The table structure for a transport according to claim 5, wherein
the protruding portion includes an expanding portion that expands toward the dented portion, and
the expanding portion includes an inclined surface that is inclined in inclination direction of the inclined portion.

7. The table structure for a transport according to claim 5, wherein a part of the side portion configuring the periphery of the protruding portion located close to the dented portion is inclined in inclination direction of the inclined portion.

8. The table structure for a transport according to any one of claims 1 to 3, wherein
a dented portion that is recessed toward inside of the main surface in a direction in which the main surface spreads is formed at the one end portion of the table in which a turning shaft is provided or at the other end portion that faces the one end portion, and
the protruding portion is provided at the table edge portion that is adjacent to edge located on an outer side of the table in a direction in which the turning shaft extends among edge of the dented portion.

9. The table structure for a transport according to claims 1 to 3, wherein
a side portion that configures a periphery of the table includes a projecting portion that projects on an outer side of the table in a direction in which the main surface spreads, and
the protruding portion projects in the thickness direction from the projecting portion.
